# EUROPEAN PATENT SPECIFICATION

(11) **EP 2 674 405 B1**
(45) Date of publication and mention of the grant of the patent: **10.01.2018**
(21) Application number: 12744431.3
(22) Date of filing: 10.02.2012
(51) Int. Cl.: C03C 27/12, C08K 3/22, C08K 5/00, C08L 29/14

(54) **INTERLAYER FOR LAMINATED GLASS AND LAMINATED GLASS**
ZWISCHENSCHICHT FÜR VERBUNDGLAS UND VERBUNDGLAS
INTERCALAIRE POUR VERRE STRATIFIÉ ET VERRE STRATIFIÉ

(30) Priority: 10.02.2011 JP 2011027522
(43) Date of publication of application: 18.12.2013
(73) Proprietor: Sekisui Chemical Co., Ltd., Osaka 530-8565 (JP)
(72) Inventor: OKABAYASHI, Takazumi, Mishima-gun, Osaka 618-0021 (JP); FUKATANI, Juichi, Kouka-shi, Shiga 528-8585 (JP); II, Daizou, Kouka-shi, Shiga 528-8585 (JP); KITANO, Hirofumi, Kouka-shi, Shiga 528-8585 (JP); TSUNODA, Ryuta, Kouka-shi, Shiga 528-8585 (JP); OSANO, Keiichi, Mishima-gun, Osaka 618-0021 (JP)
(74) Representative: Ter Meer Steinmeister & Partner
(86) International application number: PCT/JP2012/053173
(87) International publication number: WO 2012/108537

(56) References cited:
- EP-A1- 1 640 348
- WO-A1-03/018502
- WO-A1-2005/087680
- WO-A1-2010/097592
- WO-A1-2011/024787
- WO-A1-2011/024788
- WO-A1-2012/026487
- WO-A2-2007/079248
- JP-A- 7 178 861
- JP-A- 2010 215 451
- JP-A- 2011 006 271

## Description

### TECHNICAL FIELD

The present invention relates to an interlayer film for laminated glass which is used for laminated glass for vehicles, buildings, or the like. More specifically, the present invention relates to an interlayer film for laminated glass which can give higher heat-shielding properties to laminated glass; and laminated glass including the interlayer film for laminated glass.

### BACKGROUND ART

Laminated glass is safety glass which, even when broken by impact from the outside, shatters into few flying glass fragments. For this reason, laminated glass is widely used for applications such as cars, rail cars, aircrafts, boats, ships, buildings, and the like. The laminated glass is produced by sandwiching an interlayer film for laminated glass between a pair of glass plates. Such laminated glass used for openings of vehicles or buildings are required to have high heat-shielding properties.

Infrared rays having a wavelength of 780 nm or longer, which is longer than a wavelength of visible light, have a small amount of energy compared to ultraviolet rays. The infrared rays, however, have a large thermal effect, and are emitted as heat when absorbed by a substance. For this reason, the infrared rays are commonly referred to as heat rays. Laminated glass is therefore required to sufficiently shield infrared rays so as to have better heat-shielding properties.

The below-mentioned Patent Document 1 discloses an interlayer film containing tin-doped indium oxide particles (ITO particles) or antimony-doped tin oxide particles (ATO particles) as an interlayer film that effectively blocks the infrared rays (heat rays). The below-mentioned Patent Document 2 discloses an interlayer film containing tungsten oxide particles.

The below-mentioned Patent Document 3 discloses an interlayer film containing a near-infrared absorbing coloring matter, an ultraviolet absorber having a maximum absorption wavelength in a wavelength range of 250 to 400 nm, and an ethylene-vinyl acetate copolymer. Examples of the near-infrared absorbing coloring matter include phthalocyanine compounds, naphthalocyanine compounds, aluminum salt compounds, and anthraquinone compounds.

### Related Art Document

### Patent Document

Patent Document 1: WO 2001/025162 A1
Patent Document 2: WO 2005/087680 A1
Patent Document 3: JP H07(1995)-178861 A

### SUMMARY OF THE INVENTION

### PROBLEMS TO BE SOLVED BY THE INVENTION

In recent years, a further increase in the heat-shielding properties of conventional interlayer films containing heat-shielding particles such as ITO particles, ATO particles, or tungsten oxide particles has been desired. These particles, however, do not absorb near-infrared rays sufficiently. For this reason, it is difficult to greatly increase the heat-shielding properties of laminated glass by simply adding heat-shielding particles to an interlayer film as described in Patent Documents 1 and 2.

It is also difficult to sufficiently increase the heat-shielding properties of laminated glass by adding a near-infrared absorbing coloring matter and an ultraviolet absorber to an interlayer film as described in Patent Document 3 in some cases.

Laminated glass is also required to have a high visible light transmittance as well as high heat-shielding properties. That is, laminated glass is required to have high heat-shielding properties while retaining a high visible light transmittance.

However, it is very difficult to obtain laminated glass having sufficiently high heat-shielding properties and a sufficiently high visible light transmittance with use of the conventional interlayer films as described in Patent Documents 1 to 3.

Also, in laminated glass with a conventional interlayer film, an absolute value of a YI value (hereinafter, referred to as a |YI| value) sometimes become too large. A problem that the yellowness or blueness of the glass is too high is caused by a large |YI| value.

The rising environmental awareness in recent years has led to use of laminated glass having heat-shielding properties. Use of conventional laminated glass having heat-shielding properties, however, causes a problem of a great color change between before and after the use of the glass.

The present invention aims to provide an interlayer film for laminated glass which enables production of laminated glass having high heat-shielding properties and a low |YI| value; and laminated glass including the interlayer film for laminated glass.

The present invention more specifically aims to provide an interlayer film for laminated glass which enables production of laminated glass having a high visible light transmittance as well as high heat-shielding properties, a low |YI| value, and high flexibility in the color tone; and laminated glass including the interlayer film for laminated glass.

### MEANS FOR SOLVING THE PROBLEMS

A broad aspect of the present invention is an interlayer film for laminated glass as defined in claim 1.

In a specific aspect of the interlayer film for laminated glass according to the present invention, a total amount of the tungsten oxide particles and the component in 100% by weight of the interlayer film for laminated glass is 0.05% by weight or more and 0.25% by weight or less.

In another specific aspect of the interlayer film for laminated glass according to the present invention, a weight ratio of the tungsten oxide particles to the component is 100:1 to 10:1.

In yet another specific aspect of the interlayer film for laminated glass according to the present invention, the thermoplastic resin is a polyvinyl acetal resin.

In yet another specific aspect of the interlayer film for laminated glass according to the present invention, the interlayer film further includes a plasticizer.

In yet another specific aspect of the interlayer film for laminated glass according to the present invention, the interlayer film further includes an antioxidant.

The laminated glass of the present invention includes a first member for laminated glass; a second member for laminated glass; and a single-layer interlayer film or a multi-layer interlayer film placed between the first member for laminated glass and the second member for laminated glass, wherein the single-layer interlayer film or the multi-layer interlayer film includes the interlayer film for laminated glass according to the present invention.

A dominant wavelength of the laminated glass according to the present invention is preferably 495 nm or longer and 560 nm or shorter. A |YI| value of the laminated glass according to the present invention is preferably a |YI| value of 4% or lower.

### EFFECT OF THE INVENTION

The interlayer film for laminated glass according to the present invention includes a thermoplastic resin, tungsten oxide particles, and at least one component selected from a phthalocyanine compound, a naphthalocyanine compound, and an anthracocyanine compound. Such an interlayer film enables production of laminated glass having excellent heat-shielding properties and a low |YI| value. Also, the laminated glass to be obtained can suitably have various color tone.

### BRIEF DESCRIPTION OF DRAWINGS

[Fig. 1] Fig. 1 is a partially cutout cross-sectional view illustrating an example of laminated glass including the interlayer film for laminated glass according to one embodiment of the present invention.
[Fig. 2] Fig. 2 is a partially cutout cross-sectional view illustrating a variant example of laminated glass including the interlayer film for laminated glass according to one embodiment of the present invention.

### MODE(S) FOR CARRYING OUT THE INVENTION

Hereinafter, the present invention will be described in detail.

The interlayer film for laminated glass according to the present invention includes a thermoplastic resin; caesium-doped tungsten oxide particles; at least one component selected from a phthalocyanine compound, a naphthalocyanine compound, and an anthracocyanine compound, wherein the compound contains vanadium atom(s) or copper atom(s); and an ultraviolet shielding agent. Hereinafter, the at least one component selected from a phthalocyanine compound, a naphthalocyanine compound, and an anthracocyanine compound, wherein the compound contains vanadium atom(s) or copper atom(s), may also be referred to as a component X.

Since interlayer film for laminated glass according to the present invention has the above composition, the interlayer film, when used to form laminated glass, can give high heat-shielding properties to the laminated glass to be obtained. The heat-shielding properties can be effectively increased especially because the laminated glass fully absorbs near-infrared rays. Also, since the interlayer film for laminated glass according to the present invention has the above composition, the interlayer film can give a low |YI| value (absolute value of YI value) to the laminated glass to be obtained. For example, the laminated glass can be made to have a |YI| value of 4% or lower. Also, the laminated glass to be obtained can also suitably have various color tone. Particularly, the obtained laminated glass including the interlayer film for laminated glass can suitably have various color tones, even with a limited mixing ratio.

The present inventors have found that combination use of tungsten oxide particles and the specific component X especially leads to high heat-shielding properties of the laminated glass and the interlayer film for laminated glass, and also leads to a low |YI| value of the laminated glass. The present inventors have also found that, when the tungsten oxide particles are caesium-doped tungsten oxide particles, the heat-shielding properties of the interlayer film and the laminated glass can be further increased. Furthermore, the present inventors have found that the heat-shielding properties of the interlayer film and the laminated glass can be further increased when the component X contains vanadium atom(s) or copper atom(s).

Meanwhile, use of a conventional interlayer film for laminated glass which includes heat-shielding particles such as tin-doped indium oxide particles (ITO particles), antimony-doped tin oxide particles (ATO particles), and tungsten oxide particles so far has sometimes given low heat-shielding properties to the laminated glass. Accordingly, the use has not easily resulted in laminated glass having both high heat-shielding properties and high visible light transmittance.

Especially since the interlayer film for laminated glass according to the present invention includes both caesium-doped tungsten oxide particles and the above specific component X, laminated glass including the interlayer film for laminated glass according to the present invention can achieve both excellent heat-shielding properties and excellent visible light transmittance at a high level.

For example, laminated glass having a low infrared transmittance (Tir) (index of heat-shielding properties) and a high visible light transmittance can be obtained. Specifically, the laminated glass can be made to have an infrared transmittance (Tir) of 20% or lower, and a visible light transmittance of 70% or higher. The laminated glass can also be made to have an infrared transmittance (Tir) of 15% or lower.

Since the interlayer film for laminated glass according to the present invention has the above composition, the interlayer film can also give a dominant wavelength of 495 nm or longer and 560 nm or shorter to the laminated glass.

Hereinafter, the materials constituting the interlayer film for laminated glass will be described in detail.

### (Thermoplastic resin)

The thermoplastic resin contained in the interlayer film for laminated glass according to the present invention is not particularly limited. The thermoplastic resin may be a conventionally known thermoplastic resin. One thermoplastic resin may be used alone, or two or more thermoplastic resins may be used in combination.

Examples of the thermoplastic resin include polyvinyl acetal resins, ethylene-vinyl acetate copolymer resins, ethylene-acrylic copolymer resins, polyurethane resins, and polyvinyl alcohol resins. Thermoplastic resins other than these may also be used.

The above thermoplastic resin is preferably a polyvinyl acetal resin. Combination use of a polyvinyl acetal resin and a plasticizer further increases the adhesion of the interlayer film for laminated glass according to the present invention to a member for laminated glass or another interlayer film for laminated glass.

The above polyvinyl acetal resin can be produced by, for example, acetalizing a polyvinyl alcohol with an aldehyde. The above polyvinyl alcohol can be produced by, for example, saponifying polyvinyl acetate. The saponification degree of the polyvinyl alcohol is typically in the range of 70 to 99.9 mol%, preferably in the range of 75 to 99.8 mol%, and still more preferably in the range of 80 to 99.8 mol%.

The average polymerization degree of the polyvinyl alcohol is preferably 200 or higher, and more preferably 500 or higher, while it is preferably 3500 or lower, more preferably 3000 or lower, and still more preferably 2500 or lower. An average polymerization degree equal to the above lower limit or higher further increases the penetration resistance of the laminated glass. An average polymerization degree equal to the above upper limit or lower facilitates formation of the interlayer film.

The carbon number of the acetal group included in the polyvinyl acetal resin is not particularly limited. The aldehyde used in production of the polyvinyl acetal resin is not particularly limited. The carbon number of the acetal group in the polyvinyl acetal resin is preferably 3 or 4. A carbon number of the acetal group in the polyvinyl acetal resin of 3 or greater sufficiently decreases the glass transition temperature of the interlayer film.

The aldehyde is not particularly limited. Typically, a C1 to C10 aldehyde can be suitably used. Examples of the C1 to C10 aldehyde include propionaldehyde, n-butyraldehyde, isobutyraldehyde, n-valeraldehyde, 2-ethylbutyraldehyde, n-hexyl aldehyde, n-octyl aldehyde, n-nonylaldehyde, n-decyl aldehyde, formaldehyde, acetaldehyde, and benzaldehyde. Particularly, propionaldehyde, n-butyraldehyde, isobutyraldehyde, n-hexylaldehyde, and n-valeraldehyde are preferred, propionaldehyde, n-butyraldehyde, and isobutyraldehyde are more preferred, and n-butyraldehyde is still more preferred. One aldehyde may be used alone, or two or more aldehydes may be used in combination.

The hydroxy group content (amount of hydroxy groups) of the polyvinyl acetal resin is preferably 15 mol% or higher, more preferably 18 mol% or higher, and still more preferably 20 mol% or higher, while it is preferably 40 mol% or lower, more preferably 35 mol% or lower, and still more preferably 32 mol% or lower. A hydroxy group content equal to the above lower limit or higher further increases the adhesion of the interlayer film. A hydroxy group content equal to the above upper limit or lower increases the flexibility of the interlayer film, which allows easy handling of the interlayer film.

The hydroxy group content of the polyvinyl acetal resin is a value of a mol fraction in percentage (mol%) which is obtained by dividing the amount of ethylene groups bonded with hydroxy groups by the total amount of ethylene groups of the main chain. The amount of ethylene groups bonded with hydroxy groups, for example, is determined by measurement in conformity with JIS K6726 "Testing methods for polyvinyl alcohol".

The acetylation degree (amount of acetyl groups) of the polyvinyl acetal resin is preferably 0.1 mol% or higher, more preferably 0.3 mol% or higher, and still more preferably 0.5 mol% or higher, while it is preferably 30 mol% or lower, more preferably 25 mol% or lower, still more preferably 20 mol% or lower, and particularly preferably 15 mol% or lower. An acetylation degree equal to the above lower limit or higher results in high compatibility between the polyvinyl acetal resin and the plasticizer. An acetylation degree equal to the above upper limit or lower results in high moisture resistance of the interlayer film and the laminated glass.

The acetylation degree is obtained below. The amount of ethylene groups bonded with the acetal group and the amount of the ethylene groups bonded with the hydroxyl group are subtracted from the total amount of ethylene groups in the main chain. The obtained value is divided by the total amount of ethylene groups in the main chain. The obtained mole fraction expressed as percentage is the acetylation degree. The amount of the ethylene groups bonded with acetal groups, for example, is determined by measurement in conformity with JIS K6728 "Testing methods for polyvinyl butyral".

The acetalization degree (butyralization degree in the case of a polyvinyl butyral resin) of the polyvinyl acetal resin is preferably 60 mol% or higher, and more preferably 63 mol% or higher, while it is preferably 85 mol% or lower, more preferably 75 mol% or lower, and still more preferably 70 mol% or lower. An acetalization degree equal to the above lower limit or higher results in high compatibility between the polyvinyl acetal resin and the plasticizer. An acetalization degree equal to the above upper limit or lower shortens the reaction time it takes to produce a polyvinyl acetal resin.

The acetalization degree is a mole fraction expressed as percent obtained by dividing the amount of ethylene groups to which acetal groups are bonded by the total amount of ethylene groups in the main chain.

The acetalization degree can be calculated by determining the acetylation degree and the hydroxy group content in mole percentages using the methods based on JIS K 6728 "Testing Methods for Polyvinyl Butyral", and subtracting the acetylation degree and the hydroxy group content from 100 mol%.

The hydroxy group content (amount of hydroxy groups), the acetalization degree (butyralization degree), and the acetylation degree are preferably calculated from the results obtained by the methods based on JIS K 6728 "Testing Methods for Polyvinyl butyral". In the case that the polyvinyl acetal resin is a polyvinyl butyral resin, the hydroxy group content (amount of hydroxy groups), the acetalization degree (butyralization degree), and the acetylation degree can be calculated from the results obtained by the methods in accordance with JIS K 6728 "Testing Methods for Polyvinyl butyral".

### (Plasticizer)

In terms of further increasing the adhesion of the interlayer film, the interlayer film for laminated glass according to the present invention preferably includes a plasticizer. It is particularly preferred that the interlayer film include a plasticizer in the case that the thermoplastic resin included in the interlayer film is a polyvinyl acetal resin.

The plasticizer is not particularly limited, and may be a conventionally known plasticizer. One plasticizer may be used alone, or two or more plasticizers may be used in combination.

Examples of the plasticizer include organic ester plasticizers such as monobasic organic acid esters and polybasic organic acid esters, and phosphoric acid plasticizers such as organic phosphoric acid plasticizers and organic phosphorous acid plasticizers. Particularly, organic ester plasticizers are preferred. The plasticizer is preferably a liquid plasticizer.

Examples of the monobasic organic acid esters include, but not particularly limited to, glycol esters obtained by the reaction between a glycol and a monobasic organic acid, and esters of a monobasic organic acid and triethylene glycol or tripropylene glycol. Examples of the glycol include triethylene glycol, tetraethylene glycol, and tripropylene glycol. Examples of the monobasic organic acid include butyric acid, isobutyric acid, caproic acid, 2-ethylbutyric acid, heptylic acid, n-octylic acid, 2-ethylhexylic acid, n-nonylic acid, and decylic acid.

Examples of the polybasic organic acid esters include, but not particularly limited to, ester compounds of polybasic organic acids and C4 to C8 linear or branched alcohols. Examples of the polybasic organic acid include adipic acid, sebacic acid, and azelaic acid.

Examples of the organic ester plasticizers include, but not particularly limited to, triethylene glycol di-2-ethylbutyrate, triethylene glycol di-2-ethylhexanoate, triethylene glycol dicaprylate, triethylene glycol di-n-octanoate, triethylene glycol di-n-heptanoate, tetraethylene glycol di-n-heptanoate, dibutyl sebacate, dioctylazelate, dibutylcarbitol adipate, ethylene glycol di-2-ethylbutyrate, 1,3-propylene glycol di-2-ethylbutyrate, 1,4-butylene glycol di-2-ethylbutyrate, diethylene glycol di-2-ethylbutyrate, diethylene glycol di-2-ethylhexanoate, dipropylene glycol di-2-ethylbutyrate, triethylene glycol di-2-ethylpentanoate, tetraethylene glycol di-2-ethylbutyrate, diethylene glycol dicaprylate, dihexyl adipate, dioctyl adipate, hexylcyclohexyl adipate, a mixture of heptyl adipate and nonyl adipate, diisononyl adipate, diisodecyl adipate, heptylnonyl adipate, dibutyl sebacate, oil-modified alkyd sebacate, and a mixture of a phosphoric acid ester and an adipic acid ester. Organic ester plasticizers other than these may also be used.

Examples of the organic phosphoric acid plasticizer include, but not particularly limited to, tributoxyethyl phosphate, isodecyl phenyl phosphate, and triisopropyl phosphate.

The plasticizer is preferably a diester plasticizer represented by the following formula (1).

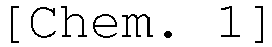

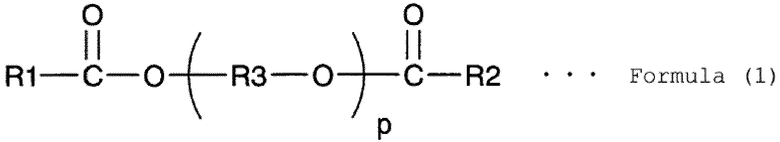

In the formula (1), R1 and R2 each represent a C2 to C10 organic group, R3 represents an ethylene group, an isopropylene group, or an n-propylene group, and p represents an integer of 3 to 10. In the formula (1), R1 and R2 each are preferably a C5 to C10 organic group, and more preferably a C6 to C10 organic group.

The plasticizer preferably includes at least one selected from triethylene glycol di-2-ethylhexanoate (3GO), triethylene glycol di-2-ethylbutyrate (3GH), and triethylene glycol di-2-ethylpropanoate, more preferably at least one selected from triethylene glycol di-2-ethylhexanoate and triethylene glycol di-2-ethylbutyrate, and still more preferably triethylene glycol di-2-ethylhexanoate. It is also preferred that the plasticizer include triethylene glycol di-2-ethylpropanoate.

The amount of the plasticizer is not particularly limited. For each 100 parts by weight of the thermoplastic resin, the amount of the plasticizer is preferably 25 parts by weight or more, more preferably 30 parts by weight or more, and still more preferably 35 parts by weight or more, while it is preferably 75 parts by weight or less, more preferably 60 parts by weight or less, and still more preferably 50 parts by weight or less. An amount of the plasticizer equal to the above lower limit or more further increases the penetration resistance of the laminated glass. An amount of the plasticizer equal to the above upper limit or less further increases the transparency of the interlayer film.

### (Tungsten oxide particles)

The tungsten oxide particles included in the interlayer film for laminated glass according to the present invention are heat-shielding particles.

The tungsten oxide particles are represented by the following formula (X2). For the interlayer film for laminated glass according to the present invention, tungsten oxide particles represented by the following formula (X2) are suitable for use.

MxWyOz Formula (X2)

In the above formula (X2), M is Cs; W represents tungsten, O represents oxygen, and x, y, and z satisfy the relations 0.001≤x/y≤1 and 2.0<z/y≤3.0.

For a further increase in the heat-shielding properties of the interlayer film and the laminated glass and a further decrease in the |YI| value, caesium-doped tungsten oxide particles are used in the present invention. For a further increase in the heat-shielding properties of the interlayer film and the laminated glass and a further decrease in the |YI| value, the caesium-doped tungsten oxide particles are preferably tungsten oxide particles represented by the formula: CS_{0.33}WO₃.

The average particle size of the tungsten oxide particles is preferably 0.01 µm or larger, and more preferably 0.02 µm or larger, while it is preferably 0.2 µm or smaller, more preferably 0.1 µm or smaller, and still more preferably 0.05 µm or smaller. An average particle size equal to the above lower limit or larger leads to sufficiently high heat-ray shielding properties. An average particle size equal to the above upper limit or smaller further increases the transparency of the interlayer film.

The above term "average particle size" means a volume-average particle size. The average particle size can be measured using a device such as a particle size distribution measuring device ("UPA-EX 150" produced by Nikkiso Co., Ltd.).

The amount of the tungsten oxide particles is not particularly limited. The amount of tungsten oxide particles in 100% by weight of the interlayer film is preferably 0.01% by weight or more, and more preferably 0.1% by weight or more, while it is preferably 3% by weight or less, more preferably 1% by weight or less, still more preferably 0.5% by weight or less, and particularly preferably 0.4% by weight or less. An amount of the tungsten oxide particles in the above range from the lower limit to the upper limit can sufficiently increase the heat-shielding properties, sufficiently decrease the |YI| value, and sufficiently increase the visible light transmittance. For example, such an amount can give a visible light transmittance of 70% or higher.

### (Component X)

The interlayer film for laminated glass according to the present invention includes the above component X. The component X is at least one component selected from a phthalocyanine compound, a naphthalocyanine compound, and an anthracocyanine compound.

The component X is not particularly limited. For the component X, conventionally known phthalocyanine compound, naphthalocyanine compound, and anthracocyanine compound can be used. One compound may be used alone, or two or more compounds may be used in combination for the component X.

Combination use of the tungsten oxide particles and the component X enables sufficient blocking of infrared rays (heat rays) and a decrease in the |YI| value of the laminated glass.

Examples of the component X include phthalocyanine, phthalocyanine derivative, naphthalocyanine, naphthalocyanine derivative, anthracocyanine, and anthracocyanine derivative. Each of the phthalocyanine compound and the phthalocyanine derivative preferably has a phthalocyanine skeleton. Each of the naphthalocyanine compound and the naphthalocyanine derivative preferably has a naphthalocyanine skeleton. Each of the anthracocyanine compound and the anthracocyanine derivative preferably has an anthracocyanine skeleton.

For a further increase in the heat-shielding properties of the interlayer film and the laminated glass, a sufficient decrease in the infrared transmittance (Tir), a sufficient decrease in the |YI| value, and a sufficient increase in the visible light transmittance, the component X is preferably at least one selected from the group consisting of phthalocyanine, phthalocyanine derivative, naphthalocyanine, and naphthalocyanine derivative.

For an effective increase in the heat-shielding properties and long-term retention of the visible light transmittance at a higher level, the component X contains vanadium atom(s) or copper atom(s), and more preferably contains vanadium atom(s). The component X is preferably at least one selected from phthalocyanine derivative containing vanadium atom(s) or copper atom(s), and naphthalocyanine derivative containing vanadium atom(s) or copper atom(s). For a further increase in the heat-shielding properties of the interlayer film and the laminated glass, the component X preferably has a structure with vanadium atom(s) .

The amount of the component X is not particularly limited. In 100% by weight of the interlayer film, the amount of the component X is preferably 0.001% by weight or more, more preferably 0.003% by weight or more, and still more preferably 0.005% by weight or more, while it is preferably 0.1% by weight or less, and more preferably 0.01% by weight or less. An amount of the component X in the above range from the lower limit to the upper limit can sufficiently increase the heat-shielding properties, sufficiently decrease the |YI| value, and sufficiently increase the visible light transmittance.

In 100% by weight of the interlayer film for laminated glass, the total amount of the tungsten oxide particles and the component X is preferably 0.01% by weight or more, more preferably 0.05% by weight or more, and still more preferably 0.1% by weight or more, while it is preferably 0.5% by weight or less, more preferably 0.25% by weight or less, and still more preferably 0.2% by weight or less. A total amount of the tungsten oxide particles and the component X in the above range from the lower limit to the upper limit can sufficiently increase the heat-shielding properties, sufficiently decrease the |YI| value, and sufficiently increase the visible light transmittance. For example, such an amount can give a |YI| value of 4% or lower, and a visible light transmittance of 70% or higher.

The interlayer film for laminated glass according to the present invention preferably includes the tungsten oxide particles and the component X in a weight ratio (tungsten oxide particles:component X) of 200:1 to 5:1, and more preferably 100:1 to 10:1. A weight ratio of the tungsten oxide particles to the component X in the above range can sufficiently increase the heat-shielding properties, sufficiently decrease the |YI| value, and sufficiently increase the visible light transmittance. For example, such a weight ratio can give a |YI| value of 4% or lower, and a visible light transmittance of 70% or higher.

### (Ultraviolet shielding agent)

The interlayer film for laminated glass according to the present invention includes an ultraviolet shielding agent. An ultraviolet shielding agent prevents the visible light transmittance from easily decreasing when the interlayer film and laminated glass are used for a long period of time. One ultraviolet shielding agent may be used alone, or two or more ultraviolet shielding agents may be used in combination.

The ultraviolet shielding agent includes an ultraviolet absorber. The ultraviolet shielding agent is preferably an ultraviolet absorber.

Examples of widely known common ultraviolet shielding agents include a metal ultraviolet shielding agent, a metal oxide ultraviolet shielding agent, a benzotriazol compound, a benzophenone compound, a triazine compound, and a benzoate compound.

Examples of the metal ultraviolet absorber include platinum particles, particles obtained by covering the surfaces of platinum particles with silica, palladium particles, and particles obtained by covering the surfaces of palladium particles with silica. The ultraviolet shielding agent is preferably not heat-shielding particles. The ultraviolet shielding agent is preferably a benzotriazol compound, a benzophenone compound, a triazine compound, or a benzoate compound, more preferably a benzotriazol compound or a benzophenone compound, and still more preferably a benzotriazol compound.

Examples of the metal oxide ultraviolet absorber include zinc oxide, titanium oxide, and cerium oxide. The surface of the metal oxide ultraviolet absorber may be covered. Examples of the coating material for the surface of the metal oxide ultraviolet absorber include insulating metal oxides, hydrolyzable organic silicon compounds, and silicone compounds.

Examples of the insulating metal oxide include silica, alumina, and zirconia. The insulating metal oxide has a bandgap energy of, for example, 5.0 eV or higher.

Examples of the benzotriazol compound include benzotriazol compounds such as 2-(2'-hydroxy-5'-methylphenyl)benzotriazol ("Tinuvin P", product of BASF A.G.), 2-(2'-hydroxy-3',5'-di-t-butylphenyl)benzotriazol ("Tinuvin 320", product of BASF A.G.), 2-(2'-hydroxy-3'-t-butyl-5-methylphenyl)-5-chlorobenzotriaz ole ("Tinuvin 326", product of BASF A.G.), and 2-(2'-hydroxy-3',5'-di-amylphenyl)benzotriazol ("Tinuvin 328", product of BASF A.G.). The ultraviolet shielding agent is preferably a benzotriazol compound containing a halogen atom, and more preferably a benzotriazol compound containing a chlorine atom because they show excellent performance of absorbing ultraviolet rays.

Examples of the benzophenone compound include octabenzone ("Chimassorb 81", product of BASF A.G.).

Examples of the benzoate compound include 2,4-di-tert-butylphenyl-3,5-di-tert-butyl-4-hydroxybenzoate ("Tinuvin 120", product of BASF A.G.).

For further prevention of a decrease in the visible light transmittance of the interlayer film and the laminated glass over time, the ultraviolet shielding agent is preferably 2-(2'-hydroxy-3'-t-butyl-5-methylphenyl)-5-chlorobenzotriaz ole ("Tinuvin 326", product of BASF A.G.) or 2-(2'-hydroxy-3',5'-di-amylphenyl)benzotriazol ("Tinuvin 328", product of BASF A.G.), and is more preferably 2-(2'-hydroxy-3'-t-butyl-5-methylphenyl)-5-chlorobenzotriaz ole.

The amount of the ultraviolet shielding agent is not particularly limited. For further suppression of a decrease in the visible light transmittance over time, the amount of the ultraviolet shielding agent in 100% by weight of the interlayer film for laminated glass is preferably 0.1% by weight or more, more preferably 0.2% by weight or more, still more preferably 0.3% by weight or more, and particularly preferably 0.5% by weight or more, while it is preferably 2.5% by weight or less, more preferably 2% by weight or less, still more preferably 1% by weight or less, and particularly preferably 0.8% by weight or less. Particularly when the amount of the ultraviolet shielding agent in 100% by weight of the interlayer film for laminated glass is 0.2% by weight or more, a decrease in the visible light transmittance of the interlayer film and the laminated glass over time can be notably suppressed.

The interlayer film for laminated glass according to the present invention preferably includes the tungsten oxide particles and the ultraviolet shielding agent in a weight ratio (% by weight) (tungsten oxide particles:ultraviolet shielding agent) of 4:1 to 1:200, and more preferably 2:1 to 1:100. A weight ratio (% by weight) of the tungsten oxide particles to the ultraviolet shielding agent in the above range can further increase the heat-shielding properties and visible light transmittance of the interlayer film and the laminated glass, and the visible light transmittance of the interlayer film and the laminated glass over time.

### (Antioxidant)

The interlayer film for laminated glass according to the present invention preferably includes an antioxidant. One antioxidant may be used alone, or two or more antioxidants may be used in combination.

Examples of the antioxidant include phenolic antioxidants, sulfuric antioxidants, and phosphoric antioxidants. The phenolic antioxidants are antioxidants with a phenol skeleton. The sulfuric antioxidants are antioxidants containing sulfur atoms. The phosphoric antioxidants are antioxidants containing phosphorus atoms.

The antioxidant is preferably a phenolic antioxidant. Examples of the phenolic antioxidants include 2,6-di-t-butyl-p-cresol (BHT), butylated hydroxyanisole (BHA), 2,6-di-t-butyl-4-ethylphenol, stearyl-β-(3,5-di-t-butyl-4-hydroxyphenyl)propionate, 2,2'-methylenebis(4-methyl-6-butylphenol), 2,2'-methylenebis(4-ethyl-6-t-butylphenol), 4,4'-butylidene-bis(3-methyl-6-t-butylphenol), 1,1,3-tris(2-methyl-hydroxy-5-t-butylphenyl)butane, tetrakis[methylene-3-(3',5'-butyl-4-hydroxyphenyl)propionat e]methane,
1,3,3-tris(2-methyl-4-hydroxy-5-t-butylphenol)butane, 1,3,5-trimethyl-2,4,6-tris(3,5-di-t-butyl-4-hydroxybenzyl)b enzene, bis(3,3'-t-butylphenol)butyric acid glycol ester, and pentaerythritol
tetrakis[3-(3,5-di-tert-butyl-4-hydroxyphenyl)propionate. One or two or more of these antioxidants may be suitably used.

For more effective long-term retention of the high visible light transmittance of the interlayer film and the laminated glass, the antioxidant is preferably 2,6-di-t-butyl-p-cresol (BHT) or pentaerythritol tetrakis[3-(3,5-di-tert-butyl-4-hydroxyphenyl)propionate.

Examples of commercially available products of the antioxidant include "Sumilizer BHT" produced by Sumitomo Chemical Co., Ltd., and "IRGANOX 1010" produced by Ciba Geigy.

For long-term retention of the high visible light transmittance of the interlayer film and the laminated glass, the amount of the antioxidant in 100% by weight of the interlayer film for laminated glass is preferably 0.1% by weight or more. Meanwhile, the amount of the antioxidant in 100% by weight of the interlayer film for laminated glass is preferably 1% by weight or less, for prevention of saturation of the effect of adding an antioxidant. In order to retain high visible light transmittance of the interlayer film and the laminated glass over time, the amount of the antioxidant is preferably as large as possible.

For a further increase in the heat-shielding properties and visible light transmittance of the interlayer film and the laminated glass and in the visible light transmittance of the interlayer film and the laminated glass over time, the amount of the antioxidant in 100% by weight of the interlayer film for laminated glass is more preferably 0.15% by weight or more, and still more preferably 0.2% by weight or more. For prevention of the yellowing of the interlayer film, the amount of the antioxidant in 100% by weight of the interlayer film for laminated glass is more preferably 2% by weight or less, and still more preferably 1.5% by weight or less.

The interlayer film for laminated glass according to the present invention preferably includes the tungsten oxide particles and the antioxidant in a weight ratio (% by weight) (tungsten oxide particles:antioxidant) of 4:1 to 1:200, and more preferably 2:1 to 1:100. A weight ratio (% by weight) of the tungsten oxide particles to the antioxidant in the above range can further increase the heat-shielding properties and visible light transmittance of the interlayer film and the laminated glass, and the visible light transmittance of the interlayer film and the laminated glass over time.

### (Other components)

The interlayer film for laminated glass according to the present invention may optionally contain additives such as a light stabilizer, a fire retardant, an antistatic agent, a pigment, a dye, an adhesion adjuster, a moisture resistance agent, a fluorescent brightener, and an infrared absorber. Each of these additives may be used alone, or two or more of these may be used in combination.

### (Interlayer film for laminated glass)

The thickness of the interlayer film for laminated glass according to the present invention is not particularly limited. In terms of the practicality and a sufficient increase in the heat-shielding properties, the thickness of the interlayer film is preferably 0.1 mm or larger, and more preferably 0.25 mm or larger, while it is preferably 3 mm or smaller, and more preferably 1.5 mm or smaller. A thickness of the interlayer film equal to the above lower limit or larger leads to high penetration resistance of the laminated glass.

The method for producing the interlayer film for laminated glass according to the present invention is not particularly limited. The method for producing the interlayer film can be a conventionally known method. Examples of the method include a production method including kneading the thermoplastic resin, tungsten oxide particles, component X, and other optional components, and molding an interlayer film. A production method with extrusion molding is preferred because the method is suitable for continuous production.

The kneading method is not particularly limited. Examples of the method include methods using an extruder, a plastograph, a kneader, a Banbury mixer, or a calender roll. Particularly, methods using an extruder are preferred because such methods are suitable for continuous production, and methods using a twin-screw extruder are more preferred.

The interlayer film for laminated glass according to the present invention can be used as a single-layered interlayer film. Also, a plurality of the interlayer films for laminated glass according to the present invention may be laminated to form a multi-layered interlayer film. Alternatively, other interlayer film(s) for laminated glass may be laminated on at least one surface of the interlayer film for laminated glass according to the present invention to form a multi-layered interlayer film. In this case, the other interlayer film(s) for laminated glass may be laminated on one surface of the interlayer film for laminated glass according to the present invention to form a multi-layered interlayer film, or the other interlayer film(s) for laminated glass may be laminated on both surfaces of the interlayer film for laminated glass according to the present invention to form a multi-layered interlayer film. The other interlayer film(s) for laminated glass can be used as, for example, protective layer (s) for the laminated glass.

The thickness of the other interlayer film(s) is preferably 0.1 mm or larger, and more preferably 0.2 mm or larger, while it is preferably 1 mm or smaller, and more preferably 0.5 mm or smaller. A thickness of the other interlayer film(s) in the above range from the lower limit to the upper limit can give not too large a thickness to the multi-layered interlayer film, and can further increase the heat-shielding properties of the multi-layered interlayer film and the laminated glass.

### (Laminated glass)

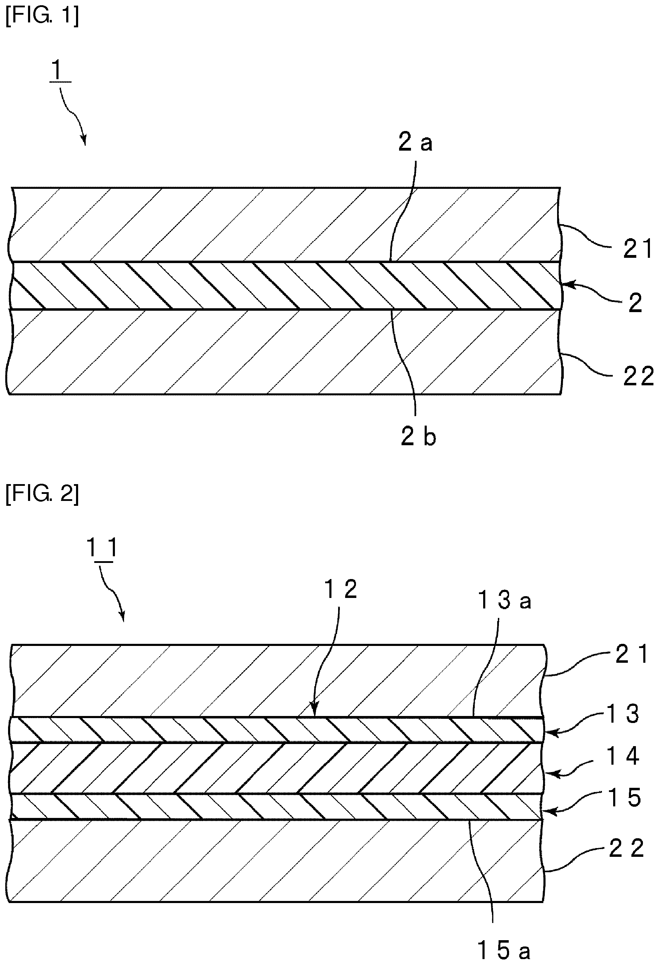

Fig. 1 is a cross-sectional view illustrating an example of laminated glass including the interlayer film for laminated glass according to one embodiment of the present invention.

Laminated glass 1 illustrated in Fig. 1 is provided with an interlayer film 2, a first member for laminated glass 21 and a second member for laminated glass 22. The interlayer film 2 is a single-layered interlayer film. The interlayer film 2 includes a thermoplastic resin, tungsten oxide particles, and the component X. The interlayer film 2 is used to obtain laminated glass. The interlayer film 2 is an interlayer film for laminated glass.

The interlayer film 2 is sandwiched between the first member for laminated glass 21 and the second member for laminated glass 22. The first member for laminated glass 21 is laminated on a first surface 2a (one surface) of the interlayer film 2. The second member for laminated glass 22 is laminated on a second surface 2b (the other surface) of the interlayer film 2 which is the opposite side of the first surface 2a.

Fig. 2 is a cross-sectional view illustrating another example of the laminated glass including the interlayer film for laminated glass according to another embodiment of the present invention.

Laminated glass 11 illustrated in Fig. 2 is provided with a multi-layered interlayer film 12, a first member for laminated glass 21 and a second member for laminated glass 22. The multi-layered interlayer film 12 includes three interlayer films of an interlayer film 13, an interlayer film 14, and an interlayer film 15 laminated in the stated order. The interlayer film 14 is a heat-shielding layer, and includes a thermoplastic resin, tungsten oxide particles, and the component X. The interlayer film 13 and the interlayer film 15 are protective layers, and are the other interlayer films mentioned above. The interlayer film 13 and the interlayer film 15 may be interlayer films including a thermoplastic resin, tungsten oxide particles, and the component X. Each of the interlayer film 13, the interlayer film 14 and the interlayer film 15 is used to obtain laminated glass. Each of the interlayer film 13, the interlayer film 14 and the interlayer film 15 is an interlayer film for laminated glass.

The multi-layered interlayer film 12 is sandwiched between the first member for laminated glass 21 and the second member for laminated glass 22. The first member for laminated glass 21 is laminated on an outer surface 13a of the interlayer film 13. The second member for laminated glass 22 is laminated on an outer surface 15a of the interlayer film 15.

As described above, the laminated glass of the present invention includes the first member for laminated glass; the second member for laminated glass; and the single-layered interlayer film or the multi-layered interlayer film sandwiched between the first member for laminated glass and the second member for laminated glass, the single-layered interlayer film or the multi-layered interlayer film including the interlayer film for laminated glass according to the present invention.

The laminated glass of the present invention encompasses laminated glass in which the interlayer film for laminated glass according to the present invention used as a single-layered interlayer film is sandwiched between the first member for laminated glass and the second member for laminated glass; and also laminated glass in which a multi-layered interlayer film, obtained by laminating two or more of the interlayer films for laminated glass according to the present invention, is sandwiched between the first member for laminated glass and the second member for laminated glass. The laminated glass of the present invention also encompasses laminated glass in which a multi-layered interlayer film, including the interlayer film for laminated glass according to the present invention and other interlayer film(s) for laminated glass laminated on at least one surface of the interlayer film for laminated glass according to the present invention, is sandwiched between the first member for laminated glass and the second member for laminated glass. In this case, the other interlayer film(s) for laminated glass may be laminated on one surface of the interlayer film for laminated glass according to the present invention to form a multi-layered interlayer film, or the other interlayer film(s) for laminated glass may be laminated on both surfaces of the interlayer film for laminated glass according to the present invention to form a multi-layered interlayer film.

Examples of the first member for laminated glass and the second member for laminated glass include glass plates and PET (polyethylene terephthalate) films. The laminated glass encompasses not only laminated glass with an interlayer film sandwiched between two glass plates, but also laminated glass with an interlayer film sandwiched between a glass plate and a PET film or the like. That is, the laminated glass is preferably a laminate including at least one glass plate.

Examples of the glass plate include inorganic glass plates and organic glass plates. Examples of the inorganic glass include float plate glass, heat absorbing glass, heat reflecting glass, polished plate glass, molded plate glass, meshed plate glass, wired plate glass, clear glass, and green glass. The organic glass is synthetic resin glass that can be substituted for inorganic glass. Examples of the organic glass plates include polycarbonate plates and poly(meth)acrylic resin plates. Examples of the poly(meth)acrylic resin plates include polymethyl (meth)acrylate plates.

The thickness of the member for laminated glass is not particularly limited, and is preferably 1 mm or larger, while it is preferably 5 mm or smaller, and more preferably 3 mm or smaller. In the case that the member for laminated glass is a glass plate, the thickness of the glass plate is preferably 1 mm or larger, while it is preferably 5 mm or smaller, and more preferably 3 mm or smaller. In the case that the member for laminated glass is a PET film, the thickness of the PET film is preferably 0.03 mm or larger, while it is preferably 0.5 mm or smaller.

The production method of the laminated glass is not particularly limited. For example, an interlayer film or multi-layered interlayer film is sandwiched between the first member for laminated glass and the second member for laminated glass, and the resulting product is pressed by a pressing roll or vacuumed under reduced pressure in a rubber bag so that the air remaining between the first member for laminated glass and the second member for laminated glass and the interlayer film or multi-layered interlayer film is removed. Thereafter, the components are preliminarily adhered at about 70 to 110°C to obtain a laminate. Next, the laminate is put in an autoclave or pressed so that the laminate is pressure-bonded at about 120 to 150°C under a pressure of 1 to 1.5 MPa. Thereby, laminated glass can be obtained.

The laminated glass can be used for cars, railcars, aircrafts, boats and ships, and buildings. The laminated glass is preferably laminated glass for buildings or vehicles, and more preferably laminated glass for vehicles. The interlayer film and the laminated glass can also be used for other uses. The interlayer film and the laminated glass can be used for windshields, side glass, rear glass, roof glass, or the like of cars. Since the interlayer film and the laminated glass have high heat-shielding properties and a high visible light transmittance, the interlayer film and the laminated glass are suitable for cars.

The dominant wavelength of the laminated glass is preferably 495 nm or longer, while it is preferably 560 nm or shorter, and more preferably 540 nm or shorter. A dominant wavelength in the above range from the lower limit to the upper limit gives an even better color tone to the laminated glass. The dominant wavelength of the laminated glass can be measured in accordance with JIS R3211 (1998).

The |YI| value of the laminated glass is preferably 6% or lower, more preferably 4% or lower, still more preferably 3% or lower, particularly preferably 2% or lower, and most preferably 1% or lower. The |YI| value of the laminated glass can be determined by calculating the absolute value of the YI value based on X, Y, and Z values of the standard illuminant C measured by the transmission method, in accordance with JIS K7103.

The visible light transmittance of the laminated glass is preferably 60% or higher, more preferably 70% or higher, and particularly preferably 72% or higher. The visible light transmittance of the laminated glass can be determined in accordance with JIS R3211 (1998).

The infrared transmittance (Tir) of the laminated glass is preferably 30% or lower, more preferably 20% or lower, still more preferably 10% or lower, and particularly preferably 7% or lower. The infrared transmittance (Tir) can be determined by measuring the infrared transmittance of the laminated glass at a wavelength of 780 to 2100 nm, and normalizing the measured infrared transmittance using the weighting factors mentioned in JIS Z8722 and JIS R3106.

The dominant wavelength, the |YI| value, the visible light transmittance, and the infrared transmittance (Tir) are preferably measured using laminated glass that has the interlayer film for laminated glass according to the present invention between two 2-mm-thick clear glass plates. The clear glass plates are ones based on JIS R3202 (1996) . The dominant wavelength, the |YI| value, the visible light transmittance, and the infrared transmittance (Tir) are preferably measured using laminated glass that has the interlayer film for laminated glass according to the present invention between two 2-mm-thick green glass plates. The green glass plates are heat-absorbing glass plates based on JIS R3208 (1998) . That is, the dominant wavelength, the |YI| value, the visible light transmittance, and the infrared transmittance (Tir) of the laminated glass that has the interlayer film for laminated glass according to the present invention between two 2-mm-thick clear glass plates or between two 2-mm-thick green glass plates preferably satisfy the above respective values.

Hereinafter, the present invention will be described in more detail based on examples. The present invention, however, is not limited to the following examples.

The following materials were used in the examples and comparative examples. The butyralization degree (acetalization degree), acetylation degree, and hydroxy group content of the polyvinyl butyral resin described below were measured by the methods in accordance with ASTM D1396-92. Here, the values measured in accordance with JIS K 6728 "Testing Methods for Polyvinyl Butyral" were the same as those measured by the methods in accordance with ASTM D1396-92.

Thermoplastic resin:
Polyvinyl butyral resin A ("PVB", product of Sekisui Chemical Co., Ltd., polyvinyl butyral resin acetalized with n-butyraldehyde, average polymerization degree: 1700, hydroxy group content: 30.5 mol%, acetylation degree: 1 mol%, butyralization degree: 68.5 mol%)
Polyvinyl butyral resin B (polyvinyl butyral resin acetalized with n-butyraldehyde, average polymerization degree: 2300, hydroxy group content: 23 mol%, acetylation degree: 12.5 mol%, butyralization degree: 64.5 mol%)
Plasticizer:
   Plasticizer 1: 3GO (triethylene glycol di-2-ethylhexanoate)
   Plasticizer 2: triethylene glycol di-2-ethylpropanoate Tungsten oxide particles (heat-shielding particles): Caesium-doped tungsten oxide particles (Cs_{0.33}WO₃) Component X:
      CKK55 (product of FUJIFILM Corporation, naphthalocyanine containing a copper atom)
      EXCOLOR 906 (product of NIPPON SHOKUBAI CO., LTD., vanadyl phthalocyanine compound containing a vanadium atom and an oxygen atom)
      EXCOLOR 915 (product of NIPPON SHOKUBAI CO., LTD., vanadyl phthalocyanine compound containing a vanadium atom)
Ultraviolet absorber:
   Tinuvin 326 (product of BASF A.G., 2-(2'-hydroxy-3'-t-butyl-5'-methylphenyl)-5-chlorobenzotria zole tinuvin)
Antioxidant:
   Sumilizer BHT (product of Sumitomo Chemical Co., Ltd., t-butyl-hydroxytoluene)

### (Example 1)

### (1) Production of interlayer film

Triethylene glycol di-2-ethylhexanoate (3GO, 40 parts by weight), an ultraviolet absorber (Tinuvin 326, 1 part by weight), an antioxidant (Sumilizer BHT, 1 part by weight), tungsten oxide particles (in an amount corresponding to 0.10% by weight in 100% by weight of the interlayer film to be obtained), and CKK55 (component X, in an amount corresponding to 0.003% by weight in 100% by weight of the interlayer film to be obtained) were mixed. To the mixture was added a phosphoric acid ester compound as a dispersant. The mixture was then mixed in a horizontal microbead mill, so that a dispersion was obtained. The amount of the phosphoric acid ester compound was adjusted to be 1/10 of the amount of the tungsten oxide particles.

The whole amount of the dispersion was added to 100 parts by weight of the polyvinyl butyral resin A, and the mixture was sufficiently kneaded using a mixing mill. Thereby, a composition was obtained.

The obtained composition was sandwiched with clearance plates (having the same thickness as the interlayer film to be obtained) between two fluororesin sheets, and they were press-molded at 150°C for 30 minutes such that a 760-µm-thick interlayer film was produced.

### (2) Production of laminated glass

The obtained interlayer film was cut into a size of 30 cm in length × 30 cm in width. Two green glass plates (based on JIS R3208 (1998), 30 cm in length × 30 cm in width × 2 mm in thickness) were prepared. The obtained interlayer film was sandwiched between these two green glass plates. The product was retained in a vacuum laminator at 90°C for 30 minutes and then vacuum-pressed, so that a laminate was obtained. The portion of the interlayer film protruding out of the glass plates was cut off, whereby laminated glass was obtained.

### (Examples 2 to 12 and Comparative Examples 1 to 3)

An interlayer film was produced in the same manner as in Example 1, except that the respective amounts of the tungsten oxide particles (heat-shielding particles) and the component X only were changed to those shown in the following Table 1. Using the obtained interlayer film, laminated glass including an interlayer film was produced in the same manner as in Example 1. In Comparative Example 1, the component X was not used. In Comparative Examples 2 and 3, tungsten oxide particles were not used.

### (Example 13)

Laminated glass was produced in the same manner as in Example 1, except that, in production of the laminated glass, the two green glass plates (based on JIS R3208 (1998), 30 cm in length × 30 cm in width × 2 mm in thickness) were changed to two clear glass plates (based on JIS R3202 (1996), 30 cm in length × 30 cm in width × 2 mm in thickness).

### (Examples 14 to 24 and Comparative Examples 4 to 6)

An interlayer film was produced in the same manner as in Example 13, except that the respective amounts of the tungsten oxide particles (heat-shielding particles) and the component X only were changed to those shown in the following Table 2. Using the obtained interlayer film, laminated glass including an interlayer film was produced in the same manner as in Example 13. In Comparative Example 4, the component X was not used. In Comparative Examples 5 and 6, tungsten oxide particles were not used.

### (Reference Example 1)

An interlayer film was produced in the same manner as in Example 1, except that the tungsten oxide particles (heat-shielding particles) and the component X were not used. Using the obtained interlayer film, laminated glass including an interlayer film was produced in the same manner as in Example 1.

### (Reference Example 2)

An interlayer film was produced in the same manner as in Example 13, except that the tungsten oxide particles (heat-shielding particles) and the component X were not used. Using the obtained interlayer film, laminated glass including an interlayer film was produced in the same manner as in Example 13.

### (Examples 25 to 30)

An interlayer film was produced in the same manner as in Example 1, except that the respective amounts of the tungsten oxide particles (heat-shielding particles) and the component X only were changed to those shown in the following Table 3. Using the obtained interlayer film, laminated glass including an interlayer film was produced in the same manner as in Example 1.

### (Examples 31 to 34)

An interlayer film was produced in the same manner as in Example 13, except that the respective amounts of the tungsten oxide particles (heat-shielding particles) and the component X only were changed to those shown in the following Table 3. Using the obtained interlayer film, laminated glass including an interlayer film was produced in the same manner as in Example 13.

### (Example 35)

An interlayer film was produced in the same manner as in Example 1, except that the plasticizer was changed from 3GO to triethylene glycol di-2-ethylpropanoate, and that the amount of the component X was changed to 0.005% by weight. Using the obtained interlayer film, laminated glass including an interlayer film was produced in the same manner as in Example 1.

### (Example 36)

An interlayer film was produced in the same manner as in Example 1, except that the plasticizer was changed from 3GO to triethylene glycol di-2-ethylpropanoate, and that the amount of the tungsten oxide particles (heat-shielding particles) was changed to 0.04% by weight. Using the obtained interlayer film, laminated glass including an interlayer film was produced in the same manner as in Example 1.

### (Example 37)

An interlayer film was produced in the same manner as in Example 1, except that the thermoplastic resin was changed from the polyvinyl butyral resin A to the polyvinyl butyral resin B, and that the amount of the component X was changed to 0.005% by weight. Using the obtained interlayer film, laminated glass including an interlayer film was produced in the same manner as in Example 1.

### (Example 38)

An interlayer film was produced in the same manner as in Example 1, except that the thermoplastic resin was changed from the polyvinyl butyral resin A to the polyvinyl butyral resin B, and that the amount of the tungsten oxide particles (heat-shielding particles) was changed to 0.04% by weight. Using the obtained interlayer film, laminated glass including an interlayer film was produced in the same manner as in Example 1.

### (Example 39)

### (1) Production of first composition for forming intermediate layer (interlayer film for laminated glass)

Triethylene glycol di-2-ethylhexanoate (3GO, 60 parts by weight), an ultraviolet absorber (Tinuvin 326, 1 part by weight), an antioxidant (Sumilizer BHT, 1 part by weight), tungsten oxide particles (in an amount corresponding to 0.10% by weight in 100% by weight of the interlayer film (intermediate layer) to be obtained), and CKK55 (component X, in an amount corresponding to 0.005% by weight in 100% by weight of the interlayer film (intermediate layer) to be obtained) were mixed. To the mixture was added a phosphoric acid ester compound as a dispersant. The mixture was then mixed in a horizontal microbead mill, so that a dispersion was obtained. The amount of the phosphoric acid ester compound was adjusted to be 1/10 of the amount of the tungsten oxide particles.

The whole amount of the dispersion was added to 100 parts by weight of the polyvinyl butyral resin B, and the mixture was sufficiently kneaded using a mixing mill. Thereby, a first composition was obtained.

### (2) Production of second composition for forming protective layer

The polyvinyl acetal resin A (100 parts by weight) and triethylene glycol di-2-ethylhexanoate (3GO, 40 parts by weight) were sufficiently kneaded using a mixing mill, so that a second composition was obtained.

The obtained first and second compositions were molded using a hot press, and thereby a multi-layered interlayer film (thickness: 810 µm) having a laminate structure of a protective film B (thickness: 350 µm)/an interlayer film A (thickness: 110 µm)/a protective film B (thickness: 350 µm) was produced.

Using the obtained multi-layered interlayer film, laminated glass including an interlayer film was produced in the same manner as in Example 1.

### (Example 40)

A multi-layered interlayer film was produced in the same manner as in Example 39, except that the respective amounts of the tungsten oxide particles (heat-shielding particles) and the component X for the first composition for forming an intermediate layer (interlayer film for laminated glass) only were changed to those shown in the following Table 4. Using the obtained multi-layered interlayer film, laminated glass including an interlayer film was produced in the same manner as in Example 1.

### (Example 41)

An interlayer film was produced in the same manner as in Example 1, except that the component X was changed to EXCOLOR 906, and that the amount of EXCOLOR 906 was 0.005% by weight. Using the obtained interlayer film, laminated glass including an interlayer film was produced in the same manner as in Example 1.

### (Examples 42 to 44)

An interlayer film was produced in the same manner as in Example 41, except that the component X used was different and that the amount of the tungsten oxide particles (heat-shielding particles) only was changed to that shown in the following Table 5. Using the obtained interlayer film, laminated glass including an interlayer film was produced in the same manner as in Example 41.

### (Evaluation)

### (1) Dominant wavelength

The dominant wavelength of the obtained laminated glass was measured using a spectrophotometer ("U-4100" produced by Hitachi High-Technologies Corporation) in accordance with JIS R 3211 (1998).

### (2) Measurement of |YI| value

The |YI| value of the laminated glass was determined in the following manner. That is, the YI value was determined from the X, Y, and Z values of the standard illuminant C measured by the transmission method using a spectrophotometer ("U-4100" produced by Hitachi High-Technologies Corporation) in accordance with JIS K 7103. Then, the absolute value of the YI value was calculated to obtain the |YI| value.

### [Criteria for determination of |YI| value]

○○: |YI| value is 2% or smaller
○: |YI| value is greater than 2% and 4% or smaller
Δ: |YI| value is greater than 4% and 6% or smaller
x: |YI| value is greater than 6%

### (3) Measurement of visible light transmittance (Y value under illuminant A, initial A-Y (380 to 780 nm))

The visible light transmittance of the obtained laminated glass at a wavelength of 380 to 780 nm was measured using a spectrophotometer ("U-4100" produced by Hitachi High-Technologies Corporation) in accordance with JIS R 3211 (1998).

### (4) Infrared transmittance

The infrared transmittance (Tir) was determined by measuring the infrared transmittance at a wavelength of 780 to 2100 nm using a spectrophotometer ("U-4100" produced by Hitachi High-Technologies Corporation), and normalizing the measured infrared transmittance using the weighting factors mentioned in JIS Z8722 and JIS R3106.

The results are shown in the following Tables 1 to 5. In the following Tables 1 to 5, the amount of tungsten oxide particles (heat-shielding particles) and the amount of the component X are the amounts (% by weight) in 100% by weight of the interlayer film (in the case of a multi-layered interlayer film, 100% by weight of the intermediate layer (interlayer film)). In the following Table 4, the kind of the polyvinyl butyral resin, the kind of the plasticizer, the amount of the heat-shielding particles, and the amount of the component X are those in the intermediate layer (interlayer film).

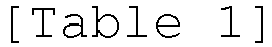

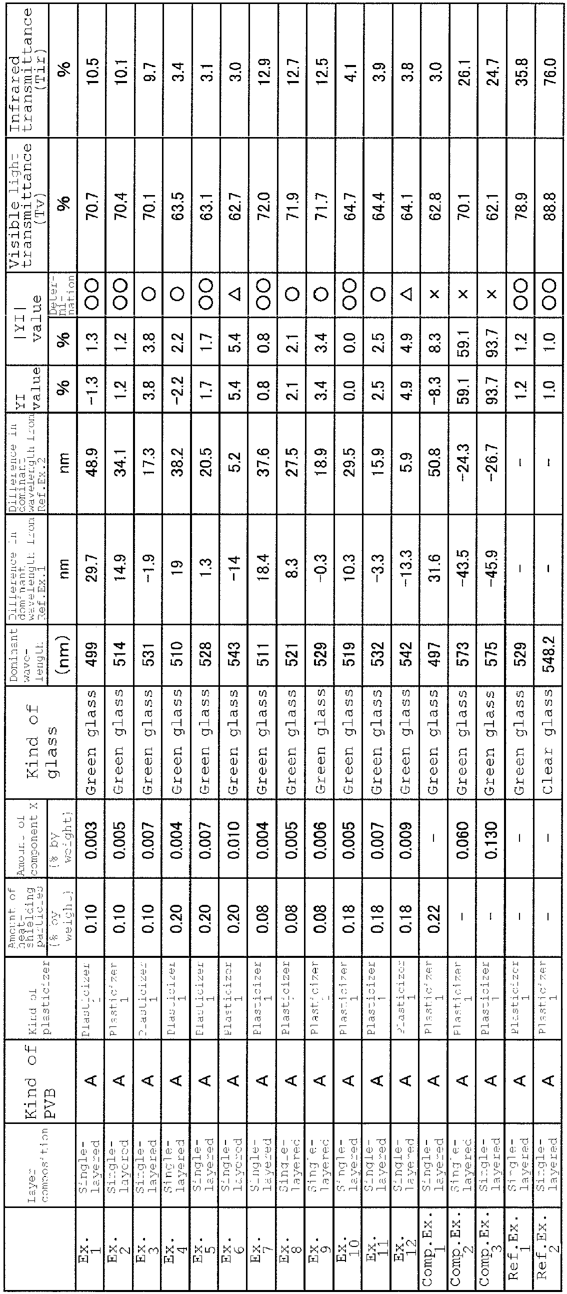

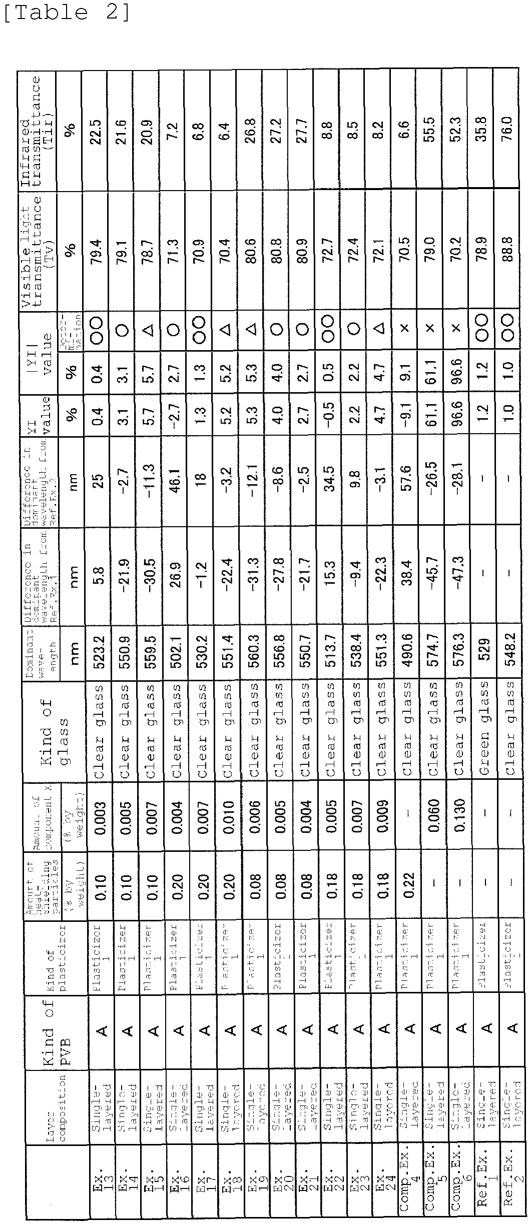

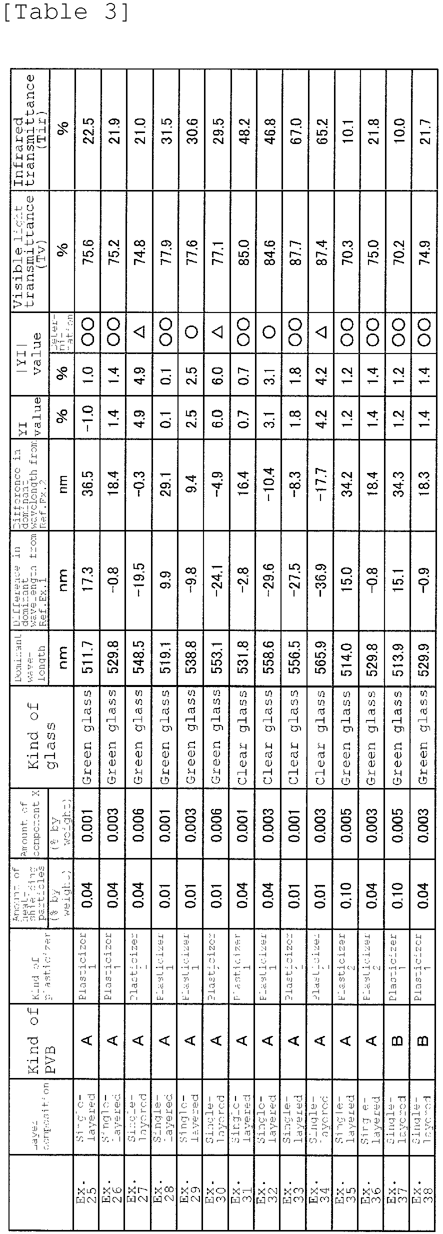

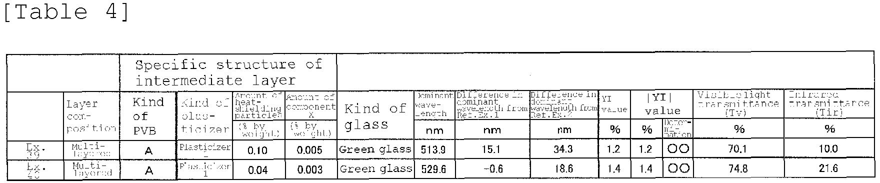

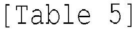

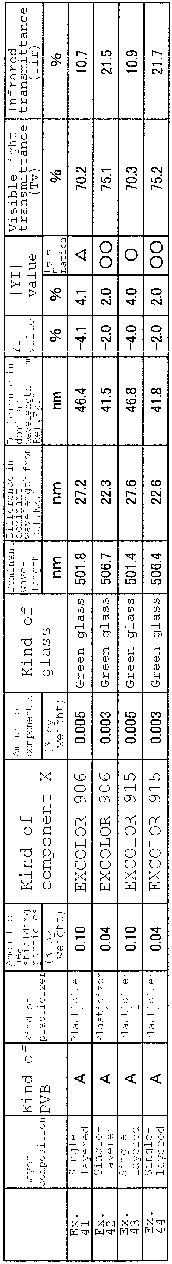

### EXPLANATION OF SYMBOLS

- 1: Laminated glass
- 2: Interlayer film
- 2a: First surface
- 2b: Second surface
- 11: Laminated glass
- 12: Multi-layered interlayer film
- 13 to 15: Interlayer film
- 13a: Outer surface
- 15a: Outer surface
- 21: First member for laminated glass
- 22: Second member for laminated glass

## Claims

1. An interlayer film for laminated glass, comprising:
a thermoplastic resin;
tungsten oxide particles;
at least one component selected from a phthalocyanine compound, a naphthalocyanine compound, and an anthracocyanine compound; and
an ultraviolet shielding agent,
wherein the tungsten oxide particles are caesium-doped tungsten oxide particles,
wherein the component contains vanadium atom (s) or copper atom(s).

2. The interlayer film for laminated glass according to claim 1,
wherein a total amount of the tungsten oxide particles and the component in 100% by weight of the interlayer film for laminated glass is 0.05% by weight or more and 0.25% by weight or less.

3. The interlayer film for laminated glass according to claim 1 or 2,
wherein a weight ratio of the tungsten oxide particles to the component is 100:1 to 10:1.

4. The interlayer film for laminated glass according to any one of claims 1 to 3,
wherein the thermoplastic resin is a polyvinyl acetal resin.

5. The interlayer film for laminated glass according to any one of claims 1 to 4, further comprising a plasticizer.

6. The interlayer film for laminated glass according to any one of claims 1 to 5, further comprising an antioxidant.

7. Laminated glass comprising:
a first member for laminated glass;
a second member for laminated glass; and
a single-layer interlayer film or a multi-layer interlayer film placed between the first member for laminated glass and the second member for laminated glass,
wherein the single-layer interlayer film or the multi-layer interlayer film includes the interlayer film for laminated glass according to any one of claims 1 to 6.

8. The laminated glass according to claim 7,
wherein a dominant wavelength measured according to JIS R 3211 (1988) is 495 nm or longer and 560 nm or shorter.

9. The laminated glass according to claim 7 or 8,
wherein a |YI| value determined from the X, Y and Z values of the standard illuminant C measured by the transmission method according to JIS K 7103 is 4% or lower.

## Patentansprüche

1. Zwischenschichtfolie für Verbundglas, umfassend:
ein thermoplastisches Harz;
Wolframoxidteilchen;
mindestens eine Komponente, gewählt aus einer Phthalocyaninverbindung, einer Naphthalocyaninverbindung und einer Anthracocyaninverbindung; und
ein Ultraviolett-Abschirmungsmittel,
wobei die Wolframoxidteilchen Cäsium-dotierte Wolframoxidteilchen sind,
wobei die Komponente Vanadiumatom(e) oder Kupferatom(e) enthält.

2. Zwischenschichtfolie für Verbundglas nach Anspruch 1, wobei eine Gesamtmenge der Wolframoxidteilchen und der Komponente in 100 Gew.-% der Zwischenschichtfolie für Verbundglas 0,05 Gew.-% oder mehr und 0,25 Gew.-% oder weniger beträgt.

3. Zwischenschichtfolie für Verbundglas nach Anspruch 1 oder 2, wobei ein Gewichtsverhältnis der Wolframoxidteilchen zu der Komponente 100:1 bis 10:1 beträgt.

4. Zwischenschichtfolie für Verbundglas nach irgendeinem der Ansprüche 1 bis 3, wobei das thermoplastische Harz ein Polyvinylacetalharz ist.

5. Zwischenschichtfolie für Verbundglas nach irgendeinem der Ansprüche 1 bis 4, weiterhin umfassend einen Weichmacher.

6. Zwischenschichtfolie für Verbundglas nach irgendeinem der Ansprüche 1 bis 5, weiterhin umfassend ein Antioxidans.

7. Verbundglas, umfassend:
ein erstes Element für Verbundglas;
ein zweites Element für Verbundglas; und
eine einschichtige Zwischenschichtfolie oder eine mehrschichtige Zwischenschichtfolie, die zwischen dem ersten Element für Verbundglas und dem zweiten Element für Verbundglas angeordnet ist,
wobei die einschichtige Zwischenschichtfolie oder die mehrschichtige Zwischenschichtfolie die Zwischenschichtfolie für Verbundglas nach irgendeinem der Ansprüche 1 bis 6 beinhaltet.

8. Verbundglas nach Anspruch 7, wobei eine dominante Wellenlänge, gemessen gemäß JIS R 3211 (1998) 495 nm oder länger und 560 nm oder kürzer ist.

9. Verbundglas nach Anspruch 7 oder 8, wobei ein |YI|Wert, bestimmt aus den X-, Y- und Z-Werten des Standard-Leuchtmittels C, gemessen durch die Transmissionsmethode gemäß JIS K 7103, 4 % oder weniger beträgt.

## Revendications

1. Un film intercouche pour verre feuilleté comprenant:
une résine thermoplastique;
des particules d'oxyde de tungstène; et
au moins un composant choisi parmi un composé de phtalocyanine, un composé de naphtalocyanine et un composé d'anthracocyanine ; et
un agent de protection contre les ultraviolets ,
dans lequel les particules d'oxyde de tungstène sont des particules d'oxyde de tungstène dopé au césium,
dans lequel le composant contient un ou plusieurs atomes de vanadium ou un ou plusieurs atomes de cuivre.

2. Le film intercouche pour verre feuilleté selon la revendication 1,
dans lequel une quantité totale des particules d'oxyde de tungstène et du composant dans 100% en poids du film intercouche pour verre feuilleté est de 0,05% en poids ou plus et de 0,25% en poids ou moins.

3. Le film intercouche pour verre feuilleté selon la revendication 1 ou 2,
dans lequel un rapport pondéral des particules d'oxyde de tungstène au composant est de 100:1 à 10:1.

4. Le film intercouche pour verre feuilleté selon l'une quelconque des revendications 1 à 3,
dans lequel la résine thermoplastique est une résine de polyvinylacétal.

5. Le film intercouche pour verre feuilleté selon l'une quelconque des revendications 1 à 4, comprenant en outre un plastifiant.

6. Le film intercouche pour verre feuilleté selon l'une quelconque des revendications 1 à 5, comprenant en outre un antioxydant.

7. Verre feuilleté comprenant:
un premier élément pour verre feuilleté;
un second élément pour verre feuilleté; et
un film intercouche monocouche ou un film intercouche multicouche placé entre le premier élément pour verre feuilleté et le second élément pour verre feuilleté,
dans lequel le film intercouche monocouche ou le film intercouche multicouche comprend le film intercouche pour verre feuilleté selon l'une quelconque des revendications 1 à 6.

8. Le verre feuilleté selon la revendication 7,
dans lequel une longueur d'onde dominante mesurée selon JIS R 3211 (1988) est de 495 nm ou plus et de 560 nm ou moins.

9. Le verre feuilleté selon la revendication 7 ou 8,
dans lequel une valeur |YI| déterminée à partir des valeurs X, Y et Z de l'étalon colorimétrique C mesuré par le procédé de transmission selon JIS K 7103 est de 4% ou moins.
